# EUROPEAN PATENT APPLICATION

(11) **EP 3 825 212 A1**
(43) Date of publication of application: **26.05.2021**
(21) Application number: 19210164.0
(22) Date of filing: 19.11.2019
(51) Int. Cl.: B62D 25/08, B62D 25/16

(54) **A WHEEL ARCH AND WHEEL ARCH ASSEMBLY, AND ASSOCIATED MULTI-LOCATION WHEEL ARCHES**

(71) Applicant: Arrival Limited, London W14 8TS (GB)
(72) Inventor: Baskett, Jeffrey Ian, London, W14 8TS (GB)
(74) Representative: Durling, Barbara Eleanor Ravenhill

(57) **Abstract**

A wheel arch (100) for housing at least one wheel of a vehicle and for attachment to a chassis (400) of a vehicle is described. The wheel arch (100) comprises a load bearing mounting point (210, 215, 230, 235, 240, 245, 250, 255), wherein the wheel arch (100) is configured to receive, in use, forces at the load bearing mounting point from a vehicle component mounted at the load bearing mounting point. A vehicle and a method of assembling a vehicle comprising the wheel arch is also described.

## Description

### Field

The present disclosure relates to a wheel arch, a wheel arch assembly, and to a vehicle having such a wheel arch or wheel arch assembly.

### Background

It is established practice in the automotive industry for vehicles to be designed and produced with wheel arches surrounding each wheel of the vehicle. Put simply, conventionally, wheel arches are openings in the vehicle's bodywork. In the established practice, the role of such wheel arches is twofold: to provide access to the wheel housed in the wheel arch, and to allow any driven wheels to be steered. This has been the case since the very first automobiles were designed and continues to be the case now, despite established automotive manufacturers spending many years and often billions of dollars in the research and development of methodologies, technologies and components for vehicles.

As a result of the deep-set, established practice towards wheel arch design, there has been little optimisation compared to developments in other areas of the automotive industry. For example, little consideration has been given as to how wheel arch design might be optimised for use with modern manufacturing techniques, such as robotic manufacturing. Further, little consideration has been given as to how wheel arch design might be optimised for use in electric vehicles. Instead, the described established practice is routed in the design of conventional vehicles powered by internal combustion engines (ICEs) and has simply been imported into the design of electric vehicles.

A problem therefore exists of how to provide wheel arches which are optimised for use with modern automotive practices.

### Summary

Aspects of the disclosure are set out in the independent claims and optional features are set out in the claims dependent thereon.

In general terms, the approach of the present solution is to provide a wheel arch which may form a structural component of a vehicle chassis and/or which has mounting points for components such as suspension and other drive components, and a wheel arch assembly comprising such a wheel arch and such components. The wheel arch and wheel arch assembly of this disclosure have numerous technical benefits. For example, the wheel arch and wheel arch assembly of this disclosure deliver reduced assembly and maintenance costs and are optimised for use with modern automotive approaches and techniques, such as robotic manufacture, smart quality control, and electric vehicles. This is for the reasons set out below.

According to a first aspect, there is provided a wheel arch for housing at least one wheel of a vehicle and for attachment to a chassis of a vehicle, the wheel arch comprising a load bearing mounting point, wherein the wheel arch is configured to receive, in use, forces at the load bearing mounting point from a vehicle component mounted at the load bearing mounting point.

In this way, unlike a traditional wheel arch, which simply provides access to a wheel in the wheel arch and allows that wheel to turn, the described wheel arch provides structural support and so forms a structural component of the vehicle. The wheel arch may thus be referred to as a structural wheel arch. As a result, vehicle components which are load bearing, such as suspension mounts, may be directly attached to the wheel arch, for example via a load bearing mounting point, and housed in the wheel arch. This means that less complex vehicle designs may be provided because, rather than having to provide separate and dedicated force dissipation arrangements, such as separate strut towers, forces in the load bearing vehicle components may instead simply transfer to the wheel arch and dissipate from there to the chassis. By virtue of the wheel arch being a structural component, a less complex vehicle solution having fewer parts is provided. As the skilled person will appreciate, this leads to reduced manufacture and assembly costs and time.

According to a second aspect, there is provided a vehicle comprising:
a chassis;
a plurality of wheels; and
a wheel arch housing at least one of the wheels, the wheel arch being attached to the chassis at an attachment point and further comprising a load bearing mounting point, wherein the wheel arch is configured, in use, to:
   receive, at the load bearing mounting point, forces transmitted from a vehicle component mounted at the load bearing mounting point.

In this way, the wheel arch receives and transmits loads - that is, forces - and so forms a structural component of the vehicle. In comparison, prior art wheel arches, such as plastic wheel arch liners, are simply arranged to bear their own weight. The second aspect thus provides a vehicle benefitting from the structural advantages associated with the first aspect.

Also provided are methods of assembling a vehicle including a wheel arch or wheel arch assembly as described above. In one example, a method includes the steps of: providing a chassis, a plurality of wheels, and a wheel arch according to the first aspect or wheel arch assembly according to the second aspect; and mounting the wheel arch or wheel arch assembly to the chassis.

According to a third aspect, there is provided a wheel arch assembly comprising:
a wheel arch for housing at least one wheel of a vehicle and for attachment to a chassis of a vehicle; and
one or more vehicle components mounted to the wheel arch, wherein each of the one or more vehicle components is arranged to mechanically couple to a wheel housed in the wheel arch.

By providing these features, a self-contained - that is, modular - wheel arch assembly is provided. This is because various vehicle components can be mounted to the wheel arch, so providing a modular unit. This modular unit can be pre-assembled and - only when needed - mounted to the vehicle chassis. Advantageously, such a modular unit:
(a) Is well suited for use with robotic manufacture. This is because the wheel arch assembly - which includes both the wheel arch and the vehicle components loaded into the wheel arch - can be mounted to the chassis in a small number of robotic manipulations.
(b) Allows for simple maintenance. This is because the modular unit can be easily dismounted from the vehicle chassis for closer inspection and maintenance of the parts making up the unit.
(c) Is highly adaptable. This is because each wheel arch assembly can be easily made bespoke by adapting the components fitted to the wheel arch. For example, if a wheel arch assembly is required for an electric vehicle, a wheel arch assembly can be assembled which includes a motor generator without having to reconsider the entire design of the wheel arch.

Consequently, overall, as a result of (a) to (c), the modular wheel arch assembly unit delivers reduced assembly and maintenance costs, which are crucial considerations in vehicle design.

According to a fourth aspect, there is provided a wheel arch for housing at least one wheel of a vehicle and for attachment to a chassis of a vehicle, the wheel arch being configured to be used on either side of a vehicle.

Advantageously, because the wheel arch is configured to be used on either side of a vehicle, this results in:
(a) Reduced tooling and manufacture time and costs. This is because a single wheel arch type may be used at multiple wheel positions on a vehicle, thus limiting the total number of wheel arch types that need to be manufactured for a given vehicle.
(b) Reduced assembly time and costs. This is because, for a given vehicle, the same assembly routines and tools may be used at multiple wheel positions of the vehicle. Accordingly, the wheel arch is well suited to robotic manufacture as the robots may execute the same instructions and use the same tooling for multiple wheel positions.

Of course, it will be understood that the first through fourth aspects can be combined to provide various arrangements and may each have a number of optional features, which are set out below.

In particular with respect to the first aspect of a structural wheel arch or its combinations, for example a wheel arch configured to be used on either side of a vehicle, a structural symmetric wheel arch or an assembly comprising such a wheel arch, the load bearing mounting point may be configured to receive a vehicle component. The vehicle component may be a load bearing member arranged to mechanically couple to a wheel housed in the wheel arch. The vehicle component may be, for example, a suspension strut. Alternatively or additionally, the vehicle component may be, for example, a drive unit, optionally including an output shaft for coupling to a wheel housed in the wheel arch. Alternatively or additionally, the vehicle component may be, for example, a vehicle seat mounting, a seat belt anchorage, a vehicle body attachment and/or a vehicle panel. The vehicle panel may be a composite panel. The vehicle body attachment may be a rib of a ribcage or an attachment to a rib of a ribcage. The rib of the ribcage may be arranged to support composite panels of the vehicle. The vehicle body attachment may be at least a portion of a supporting frame or an attachment to a supporting frame. Like the ribcage, the supporting frame may be arranged to support composite panels of the vehicle. The load bearing mounting point may be configured such that, when a suspension strut is received at the mounting point, the suspension strut is orientated substantially vertically in the wheel arch.

The wheel arch may be configured to be, in use, in the force path from the vehicle component to a wheel housed in the wheel arch.

The wheel arch may be configured to transmit, in use, forces received at the load bearing mounting point from the vehicle component to the chassis of a vehicle to which the wheel arch is attached. The chassis to which the wheel arch is attached may be configured to transmit forces to a wheel housed in the wheel arch.

The wheel arch may be configured to transmit, in use, forces between a wheel housed in the wheel arch and the vehicle component, optionally via the chassis of a vehicle to which the wheel arch is attached. For example, the wheel arch may be configured, in use, to: receive forces from the vehicle component; and transmit forces received from the vehicle component to the wheel, optionally via the chassis.

In use, the forces transmitted to the load bearing mounting point may be more than 500 N. For example, the forces transmitted to the load bearing mounting point are more than 1000 N.

The wheel arch may comprise an attachment point for attaching the wheel arch to a chassis of a vehicle. The wheel arch may comprise a plurality of the attachment points. The wheel arch may be configured to transmit, in use, forces received at the load bearing mounting point to the attachment point(s). The wheel arch may be attached to the chassis of the vehicle at the attachment point(s). In use, the wheel arch may be configured to transmit forces received at the load bearing mounting point to the chassis via the attachment point(s).

The plurality of attachment points may be discrete attachment points or may be part of a continuous or substantially continuous attachment zone, for example for adhesive attachment to the chassis. The attachment points may be distributed such that, in use, forces received at the load bearing mounting point are transmitted to the chassis on either side of the load bearing mounting point. That is, forces may be transmitted to the chassis at longitudinal positions of the chassis which are either side of the longitudinal position of the load bearing mounting point relative to the chassis.

In some cases, the attachment points may be disposed on either side of the load bearing mounting point and/or may be substantially centred around the load bearing mounting point. For example, a first of the attachment points may be arranged at a first longitudinal position and a second of the attachment points may be arranged at a second longitudinal position, wherein the longitudinal position of the load bearing mounting point lies between the first and second longitudinal positions. The longitudinal positions may be defined in reference to the longitudinal axis of the chassis.

The wheel arch may comprise at least two spaced attachment points. The at least two spaced attachment points may each be substantially equidistant from the load bearing mounting point. The attachment zone may be at least partially demarcated by the at least two spaced attachment points.

Advantageously, the described arrangement of the attachment points either side of the load bearing mounting point helps to avoid unequal balancing of the wheel arch which, in use, could result in a twisting force of the wheel on the chassis. Particularly advantageously, the substantially equidistant arrangement of the two spaced attachment points from the load bearing mounting point results in the equal distribution of forces between the at least two spaced attachment points.

In an aspect, there is provided an assembly comprising the wheel arch of the first aspect and a suspension strut, the suspension strut being mounted at the load bearing mounting point.

In particular with respect to the modular wheel arch assembly of the third aspect, for example an assembly including a structural and/or symmetric wheel arch and/or a wheel arch configured to be used on either side of a vehicle, the vehicle components may comprise a suspension strut, a steering arm, a drive shaft member, a control arm, a brake unit and/or a drive unit. The one or more vehicle components may be wholly or substantially housed in the wheel arch.

The wheel arch may comprise a respective mounting point for receiving each of a vehicle seat mounting, a seat belt anchorage, a rib, a supporting frame, a vehicle body attachment and/or a vehicle panel.

The wheel arch assembly may comprise a subframe. At least one of the one or more of the vehicle components may be mounted to the wheel arch via the subframe.

Each of the one or more vehicle components may be mounted to the wheel arch or to the subframe at a respective mounting point.

The wheel arch may be formed by casting and/or stamping. Each mounting point and/or attachment point may be formed by stamping.

In another aspect, there is provided a vehicle comprising a chassis and at least one of the wheel arch assemblies of the third aspect, wherein the or each wheel arch assembly is mounted to the chassis.

The vehicle may comprise a plurality of the wheel arch assemblies of the third aspect. At least two of the plurality of wheel arch assemblies may comprise different vehicle components. That is, different vehicle components to each other.

In another aspect, there is provided a method of assembling the wheel arch assembly of the third aspect, the method comprising the steps of:
providing the wheel arch and the one or more vehicle components; and
mounting each of the one or more vehicle components to the wheel arch.

In a still further aspect, there is provided a method of assembling a vehicle, the vehicle comprising a chassis and one or more of the wheel arch assemblies of the third aspect, and the method comprising:
providing the chassis and the one or more wheel arch assemblies; and
mounting each of the one or more wheel arch assemblies to the chassis.

Each of the steps of the method of assembling the vehicle may be carried out at a different physical location. The different physical locations may be remote from each other.

With respect to, in particular (but not exclusively), the fourth aspect of a wheel arch configured to be used on either side of a vehicle or its combinations, for example a structural wheel arch configured to be used on either side of a vehicle or an assembly including such a wheel arch, at least a portion of the wheel arch may be substantially symmetrical about a plane of symmetry transverse to the wheel arch such that the wheel arch may be used on both sides of the vehicle.

Alternatively or additionally, the wheel arch may be substantially symmetrical about the plane of symmetry transverse to the wheel arch. Advantageously, when the wheel arch is substantially symmetrical, this same wheel arch may easily be used both at multiple wheel positions of the vehicle and at wheel positions on opposite sides of the vehicle. For example, the symmetrical wheel arch may be used at all four corners of a vehicle having four wheels. This is because, due to the symmetry, a wheel arch on a given side of the vehicle need only be rotated by 180° to provide a wheel arch that is equally usable on the opposite side of the vehicle. This leads to yet further reduced tooling, manufacture and assembly time and costs as only a single wheel arch type need be manufactured for any given vehicle and the same or very similar assembly routines and tools may be used at all wheel positions of the vehicle.

The wheel arch may be configured to be used both on either side of the vehicle, for example in generally diagonally opposed positions (e.g. front left and rear right), or on either side and also in the front and rear of the vehicle. For example, the wheel arch may be configured to be used at generally directly opposed positions of the vehicle.

The portion of the wheel arch may comprise one or more vehicle component mounting points. The one or more vehicle component mounting points may comprise a first and a second vehicle component mounting point, the first and second vehicle component mounting points being: located in opposing halves of the portion of the wheel arch relative to the plane of symmetry; and arranged to receive a same vehicle component. The first and second vehicle component mounting points may be configured to couple to the same vehicle component, so that the vehicle component, for example a suspension struct, is in use mounted to the first vehicle component mounting point on one side of the vehicle and to the second vehicle component mounting point on the other side of the vehicle, the sides of the vehicle being, in some cases, the left and right side of the vehicle. Advantageously, this allows the same wheel arch to be used on either side of the vehicle, whilst still allowing the wheel arch assembly to be adapted for use on the given side. That is, the same wheel arch may be used in a different - optimal - way on each side of the vehicle.

The or each vehicle component mounting point may be configured to receive a vehicle component. At least one of the one or more vehicle component mounting points may be a load bearing mounting point, and the wheel arch may be configured to receive, in use, forces at the load bearing mounting point from a vehicle component mounted at the load bearing mounting point.

The plane of symmetry may go through at least one of the one or more vehicle component mounting points. For example, the plane of symmetry may bisect or substantially bisect at least one of the one or more vehicle component mounting points.

Alternatively or additionally, the portion of the wheel arch may comprise an or the attachment point for attaching the wheel arch to a chassis of a vehicle. Accordingly, the attachment point may be substantially symmetrical about the plane of symmetry transverse to the wheel arch. Usefully, this means that, when forces transfer to the chassis from the wheel arch, via the attachment point, the forces are distributed equally across the attachment point. This helps to avoid twisting of the wheel arch.

A subframe may be coupled to the wheel arch. The subframe may be formed by casting, and optionally also machining. One or more of the vehicle components may be mounted to the wheel arch via the subframe.

Advantageously, the use of a structural wheel arch - that is, a main frame wheel arch - and a subframe coupled to the wheel arch provides a compromise between manufacturing cost, time and quality. This is because different fabrication techniques may be used for each of the main frame and subframe. In more detail, advantageously, the more complex details of the wheel arch may be concentred in the subframe, which may then be produced by casting, for example. Meanwhile, the main frame may have a relatively simple design and so may be produced by stamping, for example. As the skilled person will appreciate, stamping is typically a lower cost process than casting and is better suited to less complex parts. Accordingly, a balance is achieved between manufacturing cost and quality. Furthermore, as is discussed in more detail below, the same symmetric wheel arch may be used at all wheel positions of the vehicle. Accordingly, there is a further manufacturing cost advantage.

In an example, the subframe coupled to the wheel arch may be integral to the wheel arch. For example, the wheel arch and subframe may be fabricated in a single casting process.

In another example, the subframe may be removably coupled to the wheel arch. For example, the sub-frame may be a separate component that can be fastened removably to the wheel arch, for example using a threaded bolt or other fastener.

Advantageously, the use of a main frame wheel arch and a subframe removably coupled to the wheel arch allows for convenient maintenance. This is because the subframe can be removed in order to easily access and maintain parts coupled to the subframe, whilst leaving the main frame - which may be a structural component of the vehicle - attached to the chassis.

In an example, the subframe may be substantially symmetrical relative to the plane of symmetry. Accordingly, both the subframe and the portion of the wheel arch, or the wheel arch, may together be substantially symmetrical relative to the plane of symmetry.

Advantageously, when the subframe is substantially symmetrical, the same wheel arch may be used at all wheel positions - for example, all four corners - of a vehicle.

Alternatively, the subframe may be asymmetrical. For example, the wheel arch may be symmetrical and the subframe may be asymmetrical. Advantageously, the use of a symmetric wheel arch main frame and an asymmetric subframe provides a compromise between manufacturing and assembly complexity and vehicle performance. This is because the same symmetric wheel arch main frame can be used at all wheel positions, while the subframe can be optimally selected based on the given wheel position, for example with a view to camber and castor angles, as discussed in detail below. This means that the subframe can be chosen to deliver optimal castor and camber angles for the particular wheel (and wheel position).

The wheel arch and asymmetric subframe coupled together may be configured to be used in generally diagonally opposed positions on a vehicle chassis. For example, the sub-frame configuration for front and rear positions may be transformed from front to rear and vice versa by a 180 degree rotation. As a result, a, say, front left wheel arch and coupled subframe can be used at the rear right by rotation through 180 degrees.

In another aspect, there is provided a wheel arch assembly comprising:
a wheel arch according to the fourth aspect, and
one or more vehicle components, each of the one or more vehicle components being mounted to the wheel arch at a respective vehicle component mounting point.

In a further aspect, there is provided a vehicle comprising a chassis and four of the wheel arches according to the fourth aspect, wherein each wheel arch is mounted to the chassis. The vehicle may comprise more than four wheel arches according to the fourth aspect. The wheel arches may all be substantially the same.

Different subframes may be coupled to at least two of the wheel arches. Advantageously, this means that a same main wheel arch structure can be used at two, for example, different positions of the vehicle, but with a different subframe coupled to each to optimise the wheel arch for its specific location on the vehicle.

The vehicle may comprise a first pair of wheel arches according to the fourth aspect and a second pair of wheel arches according to the fourth aspect, and wherein: the wheel arches in each pair are substantially the same; and the wheel arches in the first and second pairs are different. A same subframe may be coupled to the wheel arches in each pair. Alternatively or additionally, the subframes coupled to the wheel arches in the first and second pairs may be different. That is, the subframes coupled to the wheel arches in each pair may be the same but may be different to the subframes coupled to the wheel arches in the other pair. The wheel arches in the first pair may be mounted at generally diagonally opposed positions on the chassis. The wheel arches in the second pair may be mounted at generally diagonally opposed positions on the chassis.

The vehicle may comprise at least two of the wheel arches: a first wheel arch and a second wheel arch. The first wheel arch may be mounted to a first side of the chassis. The second wheel arch may be mounted to a second side of the chassis, the second side being opposite the first. A same subframe may be coupled to each of the first and second wheel arches.

One of the first and second wheel arches may be mounted towards the front of the chassis. The other of the first and second wheel arches may be mounted towards the rear of the chassis. That is, the first and second wheel arches may be arranged at generally diagonally opposed positions on the chassis.

Alternatively, the first and second wheel arches may be arranged at generally directly opposed positions on the chassis. For example, the first and second wheel arches may both be arranged towards the front of the chassis, or may be both be arranged towards the rear of the chassis.

Each of the method steps recited here may be carried out using robotic assembly techniques. The robotic assembly techniques may be partly, substantially or fully autonomous.

### Brief Description of Drawings

Specific embodiments are described below in the Detailed Description by way of example only and with reference to the accompanying drawings, in which the following perspective views are shown:
Figure 1 shows a front view of a wheel arch that is according to a first embodiment and a subframe coupled to the wheel arch;
Figure 2 shows an exploded rear view of the wheel arch according to the first embodiment and the subframe;
Figure 3 shows the subframe of Figures 1 and 2;
Figure 4 shows a vehicle chassis to which two of the wheel arches according to the first embodiment are attached;
Figure 5 shows a front view of a wheel arch assembly that is according to a second embodiment; and
Figure 6 shows a rear view of the wheel arch assembly according to the second embodiment.

Throughout this disclosure, like reference numerals are used to refer to like parts.

### Detailed Description

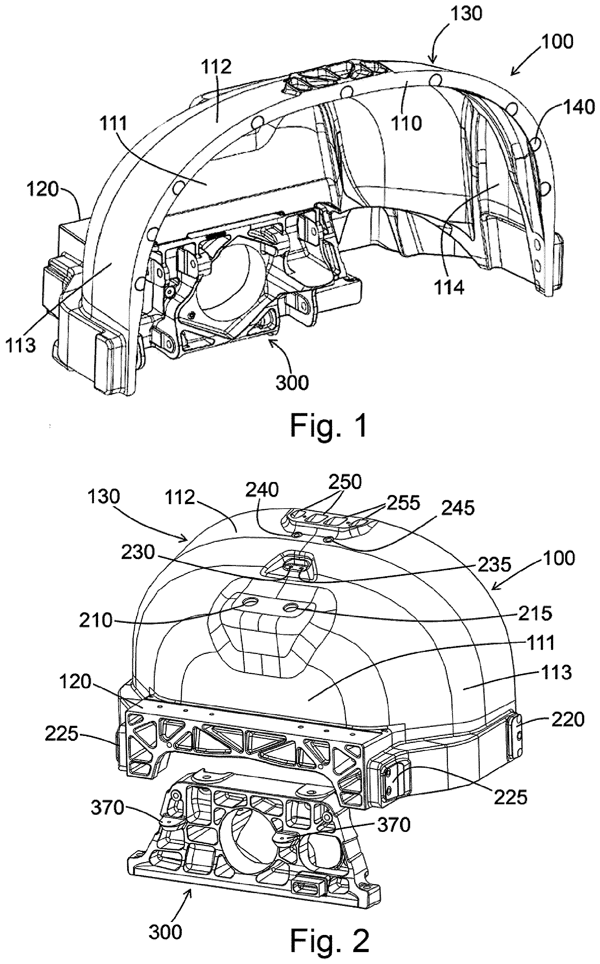

Figure 1 shows a front view of a wheel arch 100. The wheel arch 100 has an approximately arcuate mouth portion 110, a rear portion 111, a roof portion 112 and two side portions 113, 114. The roof portion 112 and two side portions 113, 114 all tend to meet the arcuate mouth portion 110. Meanwhile, the rear portion 111 tends to meet the roof portion 112 and the two side portions 113, 114. The roof portion 112 and the side portions 113, 114 are located between the rear portion 111 and the arcuate mouth portion 110. The wheel arch 100 is approximately half hemispherical in overall shape, with an open bottom portion. The wheel arch 100 is suitably sized and shaped to house a wheel for a vehicle.

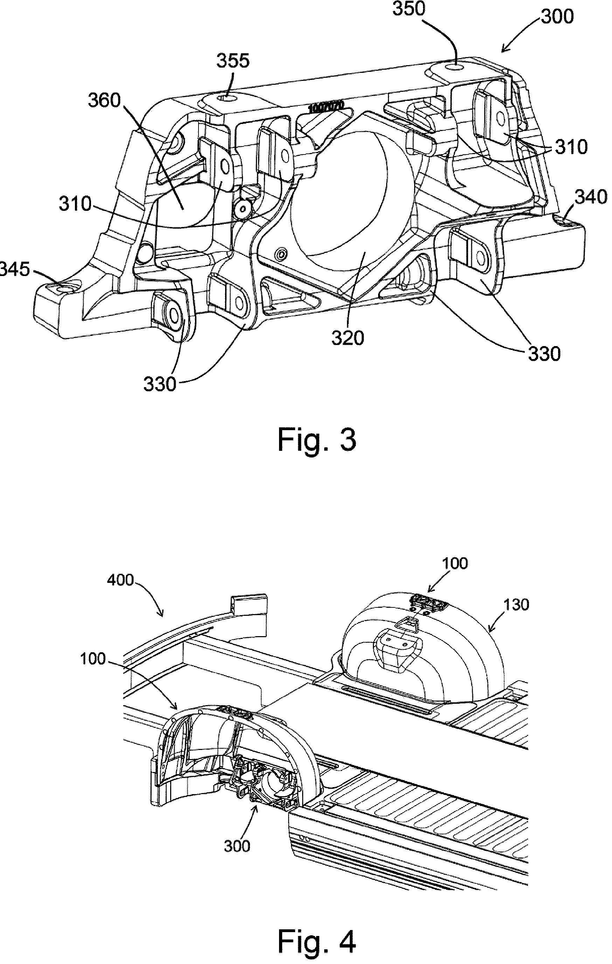

The wheel arch 100 has a main frame 130. Coupled to the main frame 130 is a subframe 300. The main frame 130 includes the arcuate mouth portion 110, the rear portion 111, the two side portions 113, 114 and the roof portion 112. The subframe 300 is a separate piece which is fixed to the rear portion 111 of the main frame 130. The subframe is discussed in more detail below in relation to Figure 3.

The wheel arch 100 has an attachment point 120. The attachment point 120 is located at the rear of the wheel arch 100 and is discussed in more detail below in relation to Figure 2. In short though, the attachment point 120 is for attaching the wheel arch 100 to a chassis of a vehicle. Further, in use, the attachment point 120 is configured to transmit forces in the wheel arch 100 to the vehicle chassis.

The main frame 130 of the wheel arch 100 is substantially symmetrical about a plane of symmetry transverse to the wheel arch 100. Specifically, the main frame 130 is substantially symmetrical about the plane transverse to the arcuate mouth portion 110 and which intersects: the peak of the arcuate mouth portion 110, the roof portion 112, and the rear portion 111 of the wheel arch.
The arcuate mouth portion 110 has nine rivet holes 140 distributed in its front facing surface. In use, composite vehicle panels are secured to the wheel arch 100 by rivets received in the rivet holes 140.

Figure 2 shows an exploded rear view of the wheel arch 100 and subframe 300. As can be seen from this rear view, the wheel arch 100 has a number of load bearing mounting points 210, 215, 230, 235, 240, 245, 250, 255.

In more detail, the wheel arch 100 has first and second load bearing mounting points 210, 215. The first and second load bearing mounting points 210, 215 are, in this example, identical and each is a hole formed in the roof portion 112 of the wheel arch 100. The first and second load bearing mounting points 210, 215 are arranged towards the rear portion 111 of the wheel arch 100 and are either side of, and close to, the above described plane of symmetry. Accordingly, the first and second mounting points 210, 215 are mirror images of each other. Each of the first and second load bearing mounting points 210, 215 is arranged to receive a same vehicle component: in this example, a suspension strut. This is described in more detail below.

The wheel arch 100 also has third and fourth load bearing mounting points 230, 235. The third and fourth load bearing mounting points 230, 235 are, in this example, identical and each is a hole formed in a recess in the roof portion 112 of the wheel arch 100. The third and fourth load bearing mounting points 230, 235 are arranged between the first and second load bearing mounting points 210, 215 and the mouth portion 110 of the wheel arch 100 and are either side of, and close to, the above described plane of symmetry. Accordingly, the third and fourth mounting points 230, 235 are mirror images of each other. Each of the third and fourth load bearing mounting points 230, 235 is arranged to receive a same vehicle component: in this example, a vehicle seat mounting.

The wheel arch 100 also has fifth and sixth load bearing mounting points 240, 245. The fifth and sixth load bearing mounting points 240, 245 are, in this example, identical and each is a hole formed in the roof portion 112 of the wheel arch 100. The fifth and sixth load bearing mounting points 240, 245 are arranged between the third and fourth load bearing mounting points 230, 235 and the mouth portion 110 of the wheel arch 100 and are either side of, and close to, the above described plane of symmetry. Accordingly, the fifth and sixth mounting points 240, 245 are mirror images of each other. Each of the fifth and sixth load bearing mounting points 240, 245 is arranged to receive a same vehicle component: in this example, a seat belt anchorage.

The wheel arch 100 also has seventh and eighth load bearing mounting points 250, 255. The seventh and eighth load bearing mounting points 250, 255 are, in this example, identical and each is formed of two adjacent holes formed in the roof portion 112 of the wheel arch 100. The seventh and eighth load bearing mounting points 250, 255 are arranged between the fifth and sixth load bearing mounting points 240, 245 and the mouth portion 110 of the wheel arch 100 and are either side of, and close to, the above described plane of symmetry. Accordingly, the seventh and eighth mounting points 250, 255 are mirror images of each other. Each of the seventh and eighth load bearing mounting points 250, 255 is arranged to receive a same vehicle component: in this example, a vehicle body attachment. The vehicle body attachment may be, for example, an attachment to a rib of a ribcage which, in use, supports composite panels of the vehicle.

As can also be seen from Figure 2, the attachment point 120 is located at the rear of the wheel arch 100. Specifically, it is located external to, and on, the rear portion 111 of the wheel arch 100. That is, it is located at the back of the wheel arch 100. In this example, the attachment point 120 is a continuous attachment zone defined by two endpoints and the attachment zone spans approximately two thirds of the full width of the wheel arch 100. The attachment zone is symmetrical about the plane of symmetry transverse to the wheel arch 100. As a result, the distances between each endpoint and the load bearing mounting points provided in its respective half of the wheel arch 100 is the same for both endpoints, the halves of the wheel arch 100 being defined by the plane of symmetry. The halves of the wheel arch 100 may interchangeably be referred to in this disclosure as opposing halves of the wheel arch 100. In this example, three rivet holes are provided at each side of the attachment zone, the sides of the attachment zone being defined by the plane of symmetry.

As mentioned above, in use, the attachment zone is configured to transmit forces in the wheel arch 100 to the vehicle chassis. The advantage of a continuous attachment zone, rather than a single, discrete attachment point, for example, is that the forces transmitted through the attachment zone are spread out over a larger contact surface area. This avoids overloading of the attachment point. Such overloading could lead to early degradation of the attachment point and, ultimately, failure of the attachment point. In addition, the symmetrical nature of the attachment zone avoids unequal balancing of forces in the wheel arch which could result in a twisting force being applied to the wheel arch and, in turn, the chassis.

In addition to the already described attachment point 120, first and second further attachment points 220, 225 are located on either side of the wheel arch 100. In more detail, a first further attachment point 220 is located at the bottom of each side portion, close to the front of the wheel arch 100. That is, at or towards the arcuate mouth portion 110. A second further attachment point 225 is located at the bottom of each side portion, close to the rear of the wheel arch 100. That is, at or towards the rear portion 111 of the wheel arch 100.

Advantageously, when the wheel arch 100 is being coupled to the vehicle chassis, the first and second further attachment points 220, 225 help to align the wheel arch 100 with the vehicle chassis. This is particularly helpful when the wheel arch 100 is used in robotic assembly processes.
The wheel arch 100 is arranged to be secured to the vehicle chassis by a combination of rivets, bolts and adhesive. In more detail, the first and second further attachment points 220, 225 are coupled to the vehicle chassis by a combination of bolts and adhesive, the first and second further attachment points 220, 225 acting as landing pads for the bolts. The attachment zone is coupled to the vehicle chassis by a combination of rivets and adhesive. For example, adhesive is applied along the length (or along substantially the length) of the attachment zone and/or rivets securing the attachment zone to the chassis are inserted into the rivet holes provided in the attachment zone. In this example, the attachment zone - that is, attachment point 120 - is arranged to couple to a floor panel of the vehicle chassis.

As for Figure 1, it can clearly be seen from Figure 2 that, in this example, the main frame 130 of the wheel arch 100 is substantially symmetrical.

Figure 3 shows the subframe 300. The subframe 300 is arranged to be removably mated with - that is, removably coupled to, the rear portion 111 of the wheel arch 100. In this example, the subframe 300 is arranged to be removably coupled to the wheel arch 100 using a bolt at each of the lower right 340 and lower left 345 corners of the subframe 300, and a dowel at each of the upper right 350 and upper left 355 corners of the subframe.

The subframe 300 has a number of mounting points 310, 320, 330, 360, 370 (shown in Figure 2). Each of the mounting points 310, 320, 330, 360, 370 is arranged to receive a vehicle component or components. A number of the mounting points 310, 330, 370 are duplicated on both sides of the subframe 300.

In more detail, one of the mounting points is an aperture 320 in the subframe 300 which is arranged to receive, for example, a drive shaft. In particular, the aperture 320 is suitably sized such that the drive shaft is received through the aperture 320 with a clearance to allow for movement of the drive shaft within the aperture 320. Usefully, this allows for play of the wheel (and thus drive shaft) in the wheel arch. Each of the mounting points 310 comprises a pair of arms, each pair of arms arranged to receive one end of a suspension control arm, such as a wishbone. Similarly, each of the mounting points 330 comprises a pair of arms, each pair of arms arranged to receive one end of a further suspension control arm, such as a wishbone. Further, another of the mounting points is a further aperture 360 in the subframe 300 which is arranged to receive a steering arm or a component for coupling with the steering arm. For example, if the wheel arch 100 and subframe 300 are attached to the rear of a vehicle which has no rear steering, the further aperture 360 is arranged to receive a bracket which in turn is arranged to fix to the rear steering arm. This provides structural support to the wheel housed in the wheel arch 100. Finally, as shown in Figure 2, mounting points 370 are provided on the rear of the subframe 300 - that is, the side of the subframe 300 which faces, in use, the chassis of the vehicle. The mounting points 370 are arranged to couple with a drive unit. In this example, the drive unit is located within the region of the chassis of the vehicle, and not within the wheel arch 100. In use, the drive unit is arranged to couple with a drive shaft extended through the aperture 320.

As has been discussed, in this example, the main frame 130 of the wheel arch 100 is symmetrical. In contrast, the subframe 300 is asymmetrical. In more detail the subframe 300 is asymmetrical about the plane which is transverse to the arcuate mouth portion 110 and which intersects the peak of the arcuate mouth portion 110.

Advantageously, the use of a symmetric wheel arch main frame 130 and an asymmetric subframe 300 provides a compromise between manufacturing and assembly complexity and vehicle performance. This is because the same symmetric wheel arch main frame can be used at all wheel positions, while the subframe can be optimally selected based on the given wheel position. This means that the subframe can be chosen to deliver optimal castor and camber angles for the particular wheel (and wheel position).

In more detail, it is highly desirable from a manufacturing and assembly perspective to use the exact same wheel arch structure at all wheel positions of the vehicle; however, this can lead to poor vehicle performance. In particular, to poor vehicle stability, handling and tyre wear. This is because, when the exact same wheel arch structure is used at all wheel positions, it is not easy to optimise the camber and castor angles for each wheel position. For completeness, reasons why camber and castor angles are important will now be given. For a given wheel, the camber angle is the angle between the vertical axis of the wheel and the vertical axis of the vehicle. In other words, the inclination of the wheel towards or away from the vehicle body. The camber angle must be optimised at each wheel position to prevent, in use, a positive camber angle developing. A positive camber angle means that the wheel is tilting away from the vehicle body, which results in reduced grip (and so unstable and undesirable handling) and uneven tyre wear. Meanwhile, the castor angle is the angle between the steering axis from the vertical axis of the wheel. That is, the inclination of the steering axis forwards or backwards (relative to the longitudinal axis of the vehicle). The castor angle must be optimised at each wheel position to avoid a low castor angle. The larger the castor angle, the more wheel self-aligning torque is produced and the easier the wheel (and thus the vehicle) is to control. Additionally, increased castor angles help increase camber gain on bumps and turns, which helps with grip. Conversely, if too small a castor angle is used, the wheel can be difficult to control and so result in poor vehicle stability and handling. In particular, when too small a castor angle is used, the steering feedback may be similar to when driving on ice, which is highly undesirable. It is therefore highly advantageous to be able to optimise the camber and castor angles for each wheel position. The use of an asymmetric subframe 300 allows for this, whilst still delivering manufacturing and assembly advantages by provision of the asymmetric subframe 300 in a symmetric main frame 130.

Looking now to the use of the wheel arch 100. In use, the wheel arch 100 is configured to receive - at all or some of the load bearing mounting points - forces from vehicle components mounted at those load bearing mounting points. The wheel arch 100 is then configured to transmit these forces to the vehicle chassis 400, for example via the attachment point 120. Consequently, in use, the wheel arch 100 is configured to receive forces from vehicle components mounted to the wheel arch 100 and transmit these forces to the vehicle chassis 400. As a result, the wheel arch 100 has a structural role and so forms a structural component of the vehicle.

For example, when a suspension strut is mounted to one or both of the first and second load bearing mounting points 210, 215 , the wheel arch 100 is configured, in use, to receive - at the respective one(s) of the first and second load bearing mounting points 210, 215 - forces transmitted to the suspension strut(s) from the wheel housed in the wheel arch 100. The wheel arch 100 is configured to receive at least a portion of these forces and transmit these forces to the vehicle chassis 400, for example via the attachment point 120. Consequently, in use, the wheel arch 100 is configured to receive forces from the wheel (via the suspension strut) and transmit the received forces to the vehicle chassis 400. As a result, the wheel arch 100 has a structural role and so forms a structural component of the vehicle.

Similarly, when a vehicle seat is mounted to one or both of the third and fourth load bearing mounting points 230, 235 , the wheel arch 100 is configured, in use, to receive - at the respective one(s) of the third and fourth load bearing mounting points 230, 235 - forces transmitted to the vehicle seat. The forces transmitted to the seat may be due to the weight of a person using the seat, for example. The wheel arch 100 is configured to receive at least a portion of these forces and transmit these forces to the vehicle chassis 400, for example via the attachment point 120. Forces may then transmitted from the vehicle chassis 400 to the ground via a wheel housed in the wheel arch 100. Consequently, in use, the wheel arch 100 is configured to transmit forces from a vehicle seat to the vehicle chassis 400. As a result, the wheel arch 100 has a structural role and so forms a structural component of the vehicle.

Likewise, when a seat belt is mounted to one or both of the fifth and sixth load bearing mounting points 240, 245 , the wheel arch 100 is configured, in use, to receive - at the respective one(s) of the fifth and sixth load bearing mounting points 240, 245 - forces transmitted to the seat belt. The forces transmitted to the seat belt may be due to the weight of a person impacting against the seat belt, for example. The wheel arch 100 is configured to receive at least a portion of these forces and transmit these forces to the vehicle chassis 400, for example via the attachment point 120. Forces may then transmitted from the vehicle chassis 400 to the ground via a wheel housed in the wheel arch 100. Consequently, in use, the wheel arch 100 is configured to transmit forces from a seat belt to the vehicle chassis 400. As a result, the wheel arch 100 has a structural role and so forms a structural component of the vehicle.

Similarly, when a rib is mounted to one or both of the seventh and eighth load bearing mounting points 250, 255 the wheel arch 100 is configured, in use, to receive - at the respective one(s) of the seventh and eighth load bearing mounting points 250, 255 -forces transmitted to the rib. The forces transmitted to the rib may be due to the combined weight of the ribcage and the composite panels fixed to the ribcage, for example. The wheel arch 100 is configured to receive at least a portion of these forces and transmit these forces to the vehicle chassis 400, for example via the attachment point 120. Forces may then transmitted from the vehicle chassis 400 to the ground via a wheel housed in the wheel arch 100. Consequently, in use, the wheel arch 100 is configured to transmit forces from a rib to the vehicle chassis 400 and/or ground. As a result, the wheel arch 100 has a structural role and so forms a structural component of the vehicle.

Figure 4 shows a part of a vehicle chassis 400. Two of the previously described wheel arches 100 (optionally each coupled with a subframe 300) are attached to the vehicle chassis 400: one wheel arch 100 at a first wheel location, and one wheel arch 100 at a second, different wheel location. The wheel locations are on opposite sides of the chassis 400. Accordingly, the same wheel arch 100 is used on both sides of the chassis 400. However, in this example, the subframe 300 coupled to each of the wheel arches 100 is different.

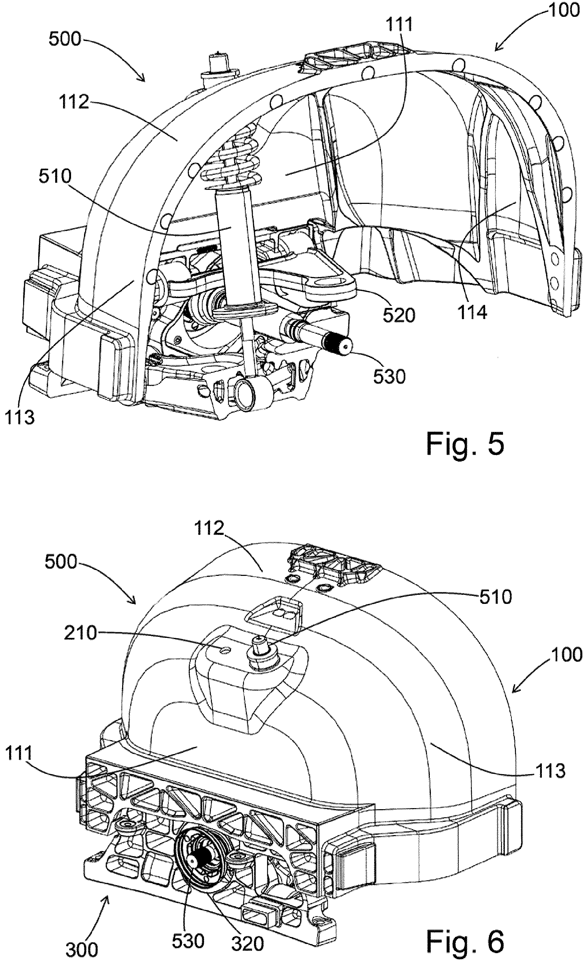

Figure 5 shows a wheel arch assembly 500. The wheel arch assembly 500 includes the previously described wheel arch 100 and a number of vehicle components. The vehicle components are mounted to the wheel arch 100.

In more detail, the wheel arch assembly 500 includes a suspension strut 510, a control arm 520 and a drive shaft 530 mounted to the wheel arch 100. The suspension strut 510 has a first end and a second end. The first end of the suspension strut 510 is mounted to the wheel arch 100 at the second load bearing mounting point 215. This can be seen more clearly in Figure 6. The second end of the suspension strut 510 is arranged to be mounted, in use, to a wheel housed in the wheel arch 100. The control arm 520 is, in this example, a wishbone having a primary end and two splayed ends. Each of the splayed ends is mounted to the wheel arch 100 at a respective mounting point 310 of the subframe 300. Meanwhile, the main end is arranged, in use, to be mounted to a wheel housed in the wheel arch 100. Lastly, the drive shaft 530 extends through the aperture 320 of the subframe 300 such that a first end of the drive shaft 530 is arranged beyond the rear portion 111 of the wheel arch 100, and a second end of the drive shaft 530 is housed within the wheel arch 100. The drive shaft 530 is arranged to be mounted, in use, to a drive unit or, in some embodiments, to a drivetrain of the vehicle. The second end of the drive shaft 530 is arranged to be mounted, in use, to a wheel housed in the wheel arch 100. Each of the suspension strut 510, control arm 520 and drive shaft 530 is therefore arranged to mechanically couple to a wheel housed in the wheel arch 100.

The wheel arch assembly 500 may be mounted to a vehicle chassis, such as chassis 400. Each wheel arch assembly 500 may be first assembled and then, once assembled, mounted to a vehicle chassis. Assembly and/or mounting on the chassis may be carried out using robotic manufacture techniques.

Figure 6 shows a rear view of the wheel arch assembly 500. As can more clearly be seen from this rear view, the first end of the drive shaft 530 extends through the aperture 320 formed in the subframe 300.

As can also be seen more clearly from Figure 6, the first end of the suspension strut 510 is mounted to the second load bearing mounting point 215. In an alternative arrangement, for example if the wheel arch assembly 500 were being assembled for attachment to an opposite side of the vehicle, the suspension strut 510 might be mounted instead to the first load bearing mounting point 210. In other words, the suspension strut 510 may be mounted to either of the first or second load bearing mounting points 510, 520 depending upon the ultimate intended position of the wheel arch assembly 500 on the vehicle chassis 400.

The wheel arch 100 and wheel arch assembly 500 described in relation to Figures 1 to 6 are intended as examples only and modifications may be made to the wheel arch 100 and wheel arch assembly 500. For example:

There may be more or fewer vehicle components than described in relation not Figure 5.

The wheel arch - specifically, the main frame - may be asymmetrical. Such a wheel arch may be used in a wheel arch assembly. Further, in such a wheel arch, the load bearing mounting points 210, 215 may instead be replaced by a single load bearing mounting point.

Regardless of whether the wheel arch is symmetrical or asymmetrical, the wheel arch may be configured to be used on either side of a vehicle. This is by virtue of design of the wheel arch such that it is usable through a 180 rotation of the wheel arch. For example, a given wheel arch of this disclosure may be suitable for use at generally diagonally opposite wheel positions (despite the wheel arch not being symmetric) because the wheel arch has been designed in such a way that it may adequately perform at both positions despite the 180° rotation of the wheel arch between the positions. When the wheel arch is symmetrical, the positioning of the features of the wheel arch relative to the chassis is the same regardless of which side of the vehicle the wheel arch is used. That is, regardless of a 180° rotation of the wheel arch. Conversely, when the wheel arch is asymmetrical, the positioning of the features of the wheel arch relative to the chassis will be dependent upon which side of the vehicle the wheel arch is used. Such an asymmetrical wheel arch may though still be usable on both sides of the vehicle.

A same or a different subframe may be used at each wheel position of the vehicle. For example, a first subframe may be used at the front right and rear left wheels positions of a vehicle, while a second, different subframe may be used at the rear right and front left wheel positions of the vehicle. That is, the same subframe may be used at diagonally opposite wheel positions.

Each subframe may be formed by an initial casting process. The same casting process may be used for each subframe. Each casting may then be subsequently machined according to the final subframe design. This is an efficient manufacturing technique.

The subframe 300 may be symmetrical. For example, the subframe 300 may be symmetrical about the plane which is transverse to the arcuate mouth portion 110 and which intersects the peak of the arcuate mouth portion 110. The plane of symmetry may intersect the aperture 320. Meanwhile, the others of the mounting points 310, 330, 360, 370 may not be intersected by the plane of symmetry and so may be exactly duplicated on both sides of the subframe 300.

The wheel arch may not have any load bearing mounting points. For example, the wheel arch may be a symmetrical structure, optionally having one or more vehicle component mounting points. One or more of the vehicle component mounting points may be a load bearing mounting point, but need not essentially be so. Such a wheel arch may be used in a wheel arch assembly.

The load bearing mounting points 210, 215 in the wheel arch may be located elsewhere in the wheel arch structure and may take a different form and number. That is, the load bearing mounting points 210, 215 need not be holes formed in the roof portion 112 of the wheel arch. Instead, the load bearing mounting points 210, 215 may be brackets formed in the sides of the wheel arch, for example.

The mounting points in the wheel arch may be located elsewhere in the wheel arch 100 structure and may take a different form and number.

The symmetrical wheel arch may additionally or alternatively comprise a load bearing mounting point which is dissected by the plane of symmetry transverse to the wheel arch. Accordingly, a load bearing mounting point may be provided which is usable with a given vehicle component regardless of which side of the vehicle the wheel arch is intended to be fitted. Usefully, this avoids having duplicate mounting points for a given vehicle component.

The load bearing mounting points 210, 215 are arranged such that, when a suspension strut is received at either load bearing mounting point, the suspension strut is orientated substantially vertically in the wheel arch.

The suspension strut may comprise a spring and/or a shock absorber. The suspension strut may comprise a lower mount. This may be the previously described second end of the suspension strut. The lower mount may be arranged to secure indirectly to a wheel housed in the wheel arch, for example, via one or more of a control arm, a steering knuckle and/or a bearing.

In use, the or each vehicle component mounted to the wheel arch may be housed wholly or substantially in the wheel arch.

There may be at least one control arm. For example, there may be a first control arm and a second control arm. When mounted to the wheel arch, the first control arm may be substantially arranged in an upper half of the wheel arch and the second control arm may be substantially arranged in a lower half of the wheel arch. Alternatively, there may be a single control arm. When mounted to the wheel arch, the single control arm may be substantially arranged in a lower half of the wheel arch.

The wheel arch may be arranged to house a plurality of wheels. In such arrangements, the wheel arch may be configured to receive forces transmitted, in use, to any number of the plurality of wheels. For example, the wheel arch may be configured to receive forces transmitted, in use, to all of the plurality.

The wheel arch may have a different shape to that shown in, and described in relation to, the figures of this disclosure. For example, the wheel arch may have a different number of faces; have a substantially different overall shape; and/or be differently sized in any dimension.

The wheel arch may be fabricated by casting, stamping or some combination of casting and stamping. For example, the main frame of the wheel arch may be formed by stamping, while - as noted above - the subframe may be formed by casting.

Rather than being two separate components, the main frame and the subframe may instead be a single, integral component. For example, the main frame and the subframe may be formed -for example, stamped - from a single piece of sheet metal.

References in this disclosure to a vehicle component or components may be understood to mean a component or components chosen from the following, non-exhaustive list: a control arm (such as a wishbone), a drive shaft member, a brake unit, a drive unit, a tyre and a wheel. The drive unit may comprise one or more of a motor generator, a gearbox, and/or a motor generator with integrated gearing i.e. a gearmotor. The drive unit may be electric. For example, the motor generator may be an electric motor generator and the gearmotor may be an electric gearmotor.

References in this disclosure to a vehicle and vehicle chassis may be references to an electric vehicle and electric vehicle chassis, respectively. For example, the chassis 400 may be an electric vehicle chassis. The electric vehicle may be a commercial electric vehicle. It may be a vehicle for transporting cargo. It may be a vehicle for transporting people. It may be a bus. It may be a van. It may be a delivery van. It may be another type of commercial vehicle. The electric vehicle may be a wholly electric vehicle, that is, without an internal combustion engine either as a prime-mover or as a range-extender to be used to power a generator to generate electricity for charging batteries or powering a traction electric motor.

## Claims

1. A wheel arch for housing at least one wheel of a vehicle and for attachment to a chassis of a vehicle, the wheel arch being configured to be used on either side of a vehicle.

2. The wheel arch of claim 1, wherein at least a portion of the wheel arch is substantially symmetrical about a plane of symmetry transverse to the wheel arch such that the wheel arch may be used on both sides of the vehicle.

3. The wheel arch of claim 2, wherein the wheel arch is substantially symmetrical about the plane of symmetry.

4. The wheel arch of claim 2 or claim 3, wherein the at least a portion of the wheel arch comprises one or more vehicle component mounting points.

5. The wheel arch of claim 4, the one or more vehicle component mounting points comprising a first and a second vehicle component mounting point, the first and second vehicle component mounting points being:
located in opposing halves of the wheel arch relative to the plane of symmetry; and
arranged to receive a same vehicle component.

6. The wheel arch of claim 5, wherein the first and second vehicle component mounting points are configured to couple to the same vehicle component such that, in use, the vehicle component is mounted to the first vehicle component mounting point if the wheel arch is attached to one side of a vehicle, and to the second vehicle component mounting point if the wheel arch is attached to the other side of the vehicle.

7. The wheel arch of any of claims 2 to 6, wherein the portion of the wheel arch comprises an attachment point for attaching the wheel arch to a chassis of a vehicle.

8. The wheel arch of any preceding claim, wherein the wheel arch is configured to be arranged at generally diagonally opposed positions on a chassis of a vehicle.

9. The wheel arch of any preceding claim, wherein the wheel arch is configured to be arranged at generally directly opposed positions on a chassis of a vehicle.

10. The wheel arch of any preceding claim, wherein a subframe is coupled to the wheel arch, the subframe being asymmetric about the plane of symmetry.

11. The wheel arch of any preceding claim, wherein a or the subframe is removably coupled to the wheel arch.

12. A wheel arch assembly comprising:
a wheel arch according to any preceding claim; and
one or more vehicle components, each of the one or more vehicle components being mounted to the wheel arch at a respective vehicle component mounting point.

13. A vehicle comprising a chassis and four of the wheel arches according to any of claims 1 to 10 or four of the wheel arch assemblies according to claim 12, wherein the or each wheel arch is mounted to the chassis.

14. The vehicle of claim 13, wherein:
a first of the wheel arches is mounted to a first side of the chassis and a second of the wheel arches is mounted to a second side of the chassis, the second side being opposite the first; and
the first and second wheel arches are arranged at generally diagonally opposed positions on the chassis.

15. The vehicle of claim 14, wherein a or the same subframe is coupled to each of the first and second wheel arches.
